# EUROPÄISCHE PATENTSCHRIFT

(11) **EP 2 318 293 B1**
(45) Veröffentlichungstag und Bekanntmachung des Hinweises auf die Patenterteilung: **23.01.2013**
(21) Anmeldenummer: 09777283.4
(22) Anmeldetag: 17.07.2009
(51) Int. Cl.: B65G 1/137

(54) **VERFAHREN UND VORRICHTUNG ZUM MANUELLEN KOMMISSIONIEREN VON STÜCKGUT MIT EINEM DURCHLAUFREGAL**
METHOD AND APPARATUS FOR THE MANUAL ORDER PICKING OF ITEMS WITH A DYNAMIC-STORAGE RACK
PROCÉDÉ ET DISPOSITIF DE PRÉPARATION MANUELLE DE COMMANDES DE MARCHANDISES DE DÉTAIL À L'AIDE D'UNE ÉTAGÈRE DE TRANSFERT

(30) Priorität: 14.08.2008 DE 102008037657
(43) Veröffentlichungstag der Anmeldung: 11.05.2011
(73) Patentinhaber: Knapp AG, 8075 Hart bei Graz (AT)
(72) Erfinder: FREUDELSPERGER, Karl, A-8075 Hart bei Graz (AT)
(74) Vertreter: Hanke, Hilmar
(86) Internationale Anmeldenummer: PCT/EP2009/005229
(87) Internationale Veröffentlichungsnummer: WO 2010/017873

(56) Entgegenhaltungen:
- EP-A- 0 847 939
- EP-A- 1 975 091
- WO-A-2005/118436
- AT-B- 403 156
- DE-U1- 8 907 478

## Beschreibung

Die Erfindung betrifft ein Verfahren nach Anspruch 1 und eine Vorrichtung nach Anspruch 5 zum manuellen Kommissionieren von Stückgut in einer Kommissionieranlage mit einem Durchlaufregal als Vorrat zum manuellen Kommissionieren.

Es ist Stand der Technik, manuell zu kommissionierende Produkte als Vorrat in statischen Regalen zu lagern.

Ist es notwendig, größere Mengen der Produkte zu lagern und nachzufüllen, werden Durchlaufregale eingesetzt. Die Produkte werden in Originalkartons an der Rückseite in das Durchlaufregal gefüllt. An der Vorderseite werden die Kartons bei Bedarf geöffnet und Einzelprodukte für ein manuelles Kommissionieren entnommen.

Es gibt auch Lösungen, bei denen das Befüllen der Durchlaufkanäle durch ein zweidimensional bewegliches Regalbediengerät erfolgt, das auf Schienen geführt ist und längsverfahrbar und gleichzeitig höhenverstellbar ist, um Produkte in ein Regal einzulagern. Hier werden die Produkte zuerst auf einem Stellplatz im Regalbediengerät eingelagert und bei Bedarf in das Durchlaufregal geschoben.

AT 403 156 B beschreibt ein Verfahen nach dem Oberbegriff des Anspruchs 1 und eine Vorrichtung nach dem Oberbegriff des Anspruchs 5.

Die Lösung mit einem Regalbediengerät zur automatischen Befüllung hat mehrere Nachteile:
■ Die Nachrüstbarkeit ist fast nie gegeben, da die Gebäude im Bereich der Automaten zu niedrig sind, und die Decken eine zu geringe Traglast für ein Hochregal besitzen.
■ Der Durchsatz eines Regalbediengeräts reicht in vielen Fällen nicht aus, um die gewünschte Menge an Produkten von Stellplätzen in die Durchlaufkanäle zu transferieren.
■ Regalbediengerätlösungen sind darauf angewiesen, dass ein einheitliches Behältnis gelagert wird. Zumindest muss die Breite gleich sein (z.B. 1 Karton 600x400 oder 2 Kartons 300x400).
■ Alle Produkte in den Durchlaufregalen müssen zuerst in das Regal eingelagert werden.
■ Der Energiebedarf und die elektrischen Anschlusswerte eines Regalbediengeräts sind so hoch, so dass die elektrischen Zuleitungen oft nicht ausreichen.

Ausgehend vom vorgenannten Stand der Technik ist es Aufgabe der Erfindung, ein Verfahren und eine Vorrichtung zum Nachfüllen eines Durchlaufregals der eingangs genannten Gattung dahingehend zu verbessern, dass das Durchlaufregal bei einfachem Aufbau schnell und effektiv und zuverlässig mit Stückgut enthaltenden Behältern befüllt und das Stückgut ergonomisch und effektiv kommissioniert werden kann.

Gelöst wird die Aufgabe durch ein Verfahren mit den Merkmalen nach Anspruch 1, vorteilhaft weitergebildet durch die Merkmale nach den Ansprüchen 2 bis 4, sowie durch eine Vorrichtung mit den Merkmalen nach Anspruch 5, vorteilhaft weitergebildet durch die Merkmale nach den Ansprüchen 6 bis 15.

Wesen der Erfindung ist, dass das Stückgut vorzugsweise sortenrein in Behältern auf einer angetriebenen Förderstrecke zum Durchlaufregal automatisch transportiert und nach Lesung und Erkennung über einen angesteuerten stationären Lift und angesteuerte Etagenbediengeräte des Durchlaufregals in ausgewählten Durchlaufkanälen des Durchlaufregals mit von einer Kommissionierperson manuell erreichbaren Ausgängen automatisch eingebracht wird, und Stückgut aus einem Behälter an einem ausgewählten Ausgang eines Durchlaufkanals von der Kommissionierperson an ihrem Kommissionier-Arbeitsplatz auftragsbezogen einem bereitgestellten Auftragsbehälter zugeführt wird..

Neben einer sortenreinen Befüllung der Durchlaufkanäle ist auch eine Mischbefüllung für sehr langsam drehende Produkte vorteilhaft.

Insbesondere werden für die Zusammenstellung eines Kommissionierauftrags von einer oder mehreren Kommissionierpersonen an einem oder mehreren Durchlaufregalen die einem Behälter manuell entnommenen Stückgüter direkt in einen bereitgestellten Auftragsbehälter kommissioniert und auf einer abziehenden Fördertechnik unter dem Durchlaufregal abtransportiert, oder in Pufferschalen des Durchlaufregals kommissioniert und zwischengespeichert, bevor sie auf ein unter dem Durchlaufregal angeordnetes Zentralband in ein fiktives Auftragsfenster geworfen und durch Förderung auf dem Zentralband erst dann dem Auftragsbehälter übergeben werden.

Ein vollständig kommissionierter Auftragsbehälter wird einer Versandstation zugeführt.

Vollständig entleerte Behälter des Durchlaufregals können als Auftragsbehälter verwendet, aus dem Durchlaufregal gehoben und in eine bodennahe Bereitstellungsposition vor der Regalfront vorzugsweise auf eine Regalfront-Förderstrecke von der Kommissionierperson umgesetzt werden.

Die Vorrichtung zur Nachfüllung des Durchlaufregals kennzeichnet sich durch zumindest eine angetriebene Förderstrecke vorzugsweise in Form einer Staurollenbahn und zumindest ein Durchlaufregal mit geneigten Durchlaufkanälen in mehreren Regaletagen, vorzugsweise drei oder vier Regaletagen, die über einer kommissionierte Stückgüter abziehenden Fördertechnik angeordnet sind und deren Ausgänge von einer Kommissionierperson für ein manuelles Kommissionieren von Stückgut erreichbar sind. Das Durchlaufregal weist jeweils ein verfahrbares, schienengeführtes Etagenbediengerät in jeder Regaletage zum automatischen Befüllen der Durchlaufkanäle mit Behälter auf, die sortenreines Stückgut enthalten. Ferner besitzt das Durchlaufregal zumindest einen stationären Lift in einem Anschluss an die Förderstrecke für einen automatischen Transport der Behälter von der Förderstrecke in jede ausgewählte Regaletage. Schließlich umfasst das Durchlaufregal eine Pufferstrecke in jeder Regaletage in einem Anschluss an den Lift für eine automatische Übernahme der Behälter vom Lift, deren Ausgang vom Etagenbediengerät automatisch anfahrbar ist, wobei das Etagenbediengerät jeweils einen Behälter für einen Horizontaltransport zum Eingang eines ausgewählten Durchlaufkanals übernehmen kann.

Vorzugsweise sind die Etagenbediengeräte in als Schienen ausgebildeten Horizontal-Verstrebungen des Durchlaufregals geführt.

Das Durchlaufregal weist meist nur einseitige Durchlaufkanäle auf.

Auch kann das Durchlaufregal als Doppelregal ausgebildet sein, wobei die Etagenbediengeräte in einer mittigen Regalgasse des Doppelregals horizontal verfahrbar und bei den Ausgängen der Pufferstrecke und den Eingängen gegenüberliegender Durchlaufkanäle positionierbar sind.

Das Etagenbediengerät besitzt ein Lastaufnahmemittel mit antreibbaren Rollen, deren Achsen in Fahrrichtung des Etagenbediengeräts und quer zu den Durchlaufkanälen liegen.

Das Lastaufnahmemittel umfasst im Bereich der Axialenden der Rollen jeweils ein stationäres seitliches Geländer quer zur Fahrrichtung.

Der Abstand der beiden seitlichen Geländer ist zueinander einstellbar und entspricht insbesondere der Breite eines Behälters, wobei als Verstellmittel zumindest eines der beiden Geländer verstellbar ist.

Das Etagenbediengerät ist hierbei an den Eingängen unterschiedlich breiter Durchlaufkanäle positionierbar, wobei der Abstand der beiden Geländer jeweils auf die Breite des angesteuerte Durchlaufkanals eingestellt ist.

Vorzugsweise weist die Förderstrecke eine Erkennungseinrichtung zum Erkennen eines zugeführten Behälters und zur Weitergabe der Behälterdaten an einen Zentralrechner auf, welcher einen vollautomatischen Betrieb der Zuführung der Behälter nebst Sortierung in den Durchlaufkanälen bewerkstelligt.

Auch das Etagenbediengerät ist mit zumindest einem Sensor zum Erkennen des Befüllungszustands eines Durchlaufkanals ausgestattet.

Die Förderstrecke ist vorzugsweise Überkopf angeordnet, um einen ungehinderten Zugang zum Durchlaufregal und zum Kommissionierautomaten zu ermöglichen.

Die Förderstrecke kann auch eine Anbindungsstrecke für zumindest ein benachbartes Durchlaufregal aufweisen.

Das Durchlaufregal ist insbesondere aus mehreren hintereinander liegenden Regalmodulen zusammengesetzt, welche in Fahrrichtung der Etagenbediengeräte liegen.

Durch die Erfindung erfolgt also die Zuführung der Produkte zum Durchlaufregal über einen stationären Lift und leichtgewichtige verfahrbare Etagenbediengeräte einfachen Aufbaus in jeder Regaletage. Der stationäre Lift einfachen Aufbaus besitzt eine Verstellplattform vorzugsweise für nur einen Behälter. Es hat sich gezeigt, dass selbst bei Durchlaufregalen geringer Bauhöhe, die keine Hochregale sind, und von Hand einer Bedienungsperson am Ausgang erreichbar sind, gleichwohl der Einsatz eines Lifts von Vorteil ist. Auch ist die Erweiterbarkeit vorteilhaft, weil das System mit den Kommissionierautomaten mitwachsen kann. Es können die vorhandenen Etagenbediengeräte gleichermaßen die zusätzlichen Regalmodule anfahren bzw. bedienen. Die Durchlaufkanäle benötigen keine Kontrollinstrumente wie Sensoren oder Reflektoren zur Füllstandskontrolle, da die Kontrollinstrumente verfahrbar und auf den ohnehin vorhandenen Etagenbediengeräten angeordnet sind.

Die Erfindung bietet gegenüber dem eingangs genannten Stand der Technik diverse Vorteile:
■ Die Flächenlast und der Raumbedarf entsprechen den bestehenden Durchlaufregalen, wodurch einfache Nachrüstbarkeit gegeben ist.
■ Der Durchsatz des erfindungsgemäßen Durchlaufregals mit integriertem Lift und Regalbediengeräten in jeder Regaletage ist ca. viermal so hoch wie bei einer herkömmlichen Regalbediengerät-Lösung ohne Lift und ohne separate Regalbediengeräte in jeder Regaletage. Dadurch können nahezu alle Durchsatzanforderungen erfüllt werden. Produkte, die für das erfindungsgemäße System zu schnell sind, werden im Allgemeinen direkt von einer Palette in den Automaten gefüllt.
■ Dadurch, dass die Produkte nicht in ein Regal eingelagert werden müssen, sondern auf einer Rollenfördertechnik (Etagenbediengerät und Lift sind jeweils ein kleines Stück verfahrbare Rollenfördertechnik) bis zum Durchlaufkanal gebracht werden, gibt es keine Einschränkungen in der Geometrie, solange das Produkt auf der Fördertechnik transportiert werden kann.
■ Der Energiebedarf des Systems ist durch die geringen bewegten Massen der kompakten Etagenbediengeräte sehr gering. Die elektrischen Anschlusswerte betragen nur ca. 10% der Werte, die für ein konventionelles großes verfahrbares Regalbediengerät mit integriertem Lift notwendig sind.
■ Da die Produkte über Fördertechnik zum erfindungsgemäßen Durchlaufregal fahren, können sie von beliebigen Orten im Lager kommen, z.B. direkt vom Wareneingang, aus einem manuellen Palettenlager oder aus einem automatischen Hochregallager.

Weitere Vorteile sind:
- Der Bereich der Etagenbediengeräte ist auch bei beidseitiger Anordnung der Durchlaufkanäle einfach begehbar.
- Bauliche Einfachheit/Kostenersparnis
- Die Zahl der Komponenten ist gering. Dadurch ist auch der Wartungsaufwand gering.
- Die Kontrolle, ob ein Durchlaufkanal voll ist, muss nicht mehr pro Durchlaufkanal angeordnet werden, sondern wird am Etagenbediengerät zentral mitgeführt.

Die Erfindung wird nachfolgend anhand von Ausführungsbeispielen unter Bezugnahme auf die beigefügten Zeichnungen näher beschrieben; es zeigen:
- Figur 1: ein Durchlaufregal einer Kommissionieranlage nebst Behälter-Förderstrecken und abziehender Fördertechnik mit Regalfront-Förderstrecke gemäß einer ersten Erfindungsvariante in einer schematischen Perspektivansicht, gesehen von hinten,
- Figur 2: das Durchlaufregal nach Figur 1, gesehen von vorne, d.h. von der Behälter-Förderstrecke,
- Figur 3: ein Durchlaufregal einer Kommissionieranlage nebst Behälter-Förderstrecken und Zentralband mit Pufferschalen gemäß einer zweiten Erfindungsvariante in einer schematischen Perspektivansicht, gesehen von hinten,
- Figur 4: die Einzelheit einer Regalebene eines Durchlaufregals mit einem Etagenbediengerät,
- Figur 5: die Regalebene nach Figur 4 schematisch von vorne unter Weglassung eines Behälters, und
- Figuren 6, 7 und 8: das Etagenbediengerät nach Figur 4 in einer perspektivischen Ansicht sowie in einer Ansicht von der Seite und in einer Draufsicht.

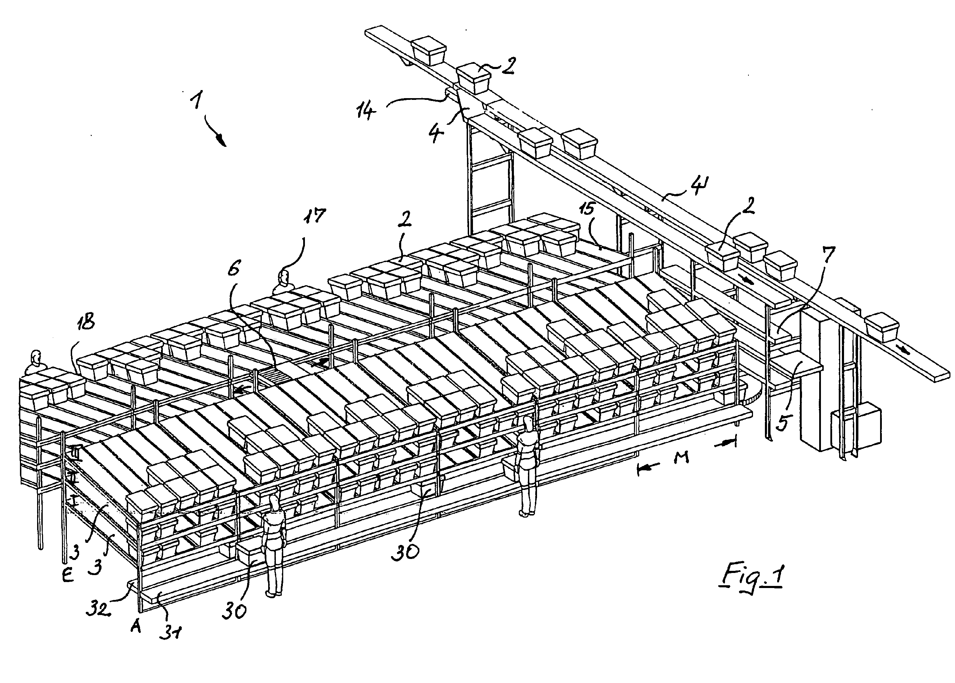

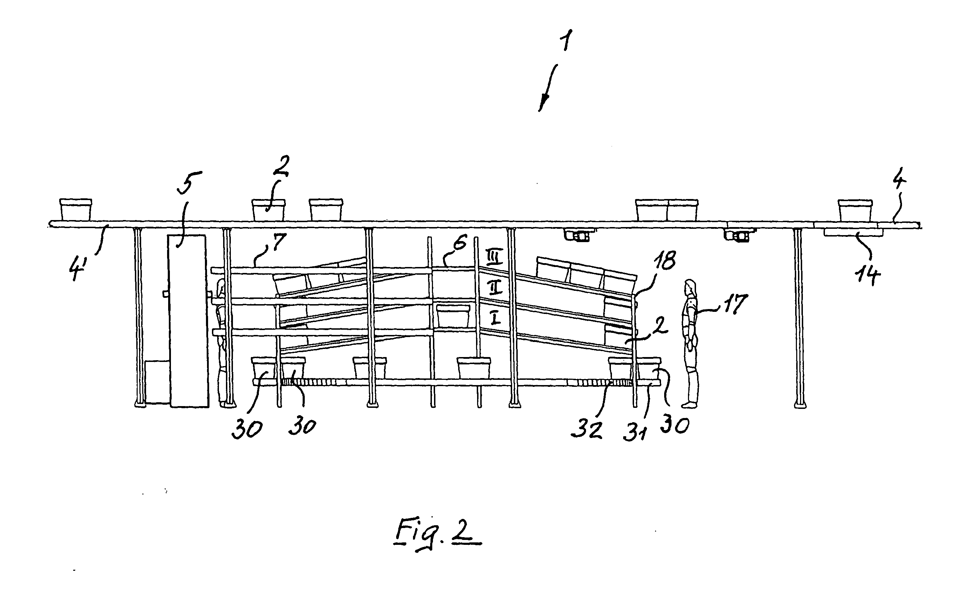

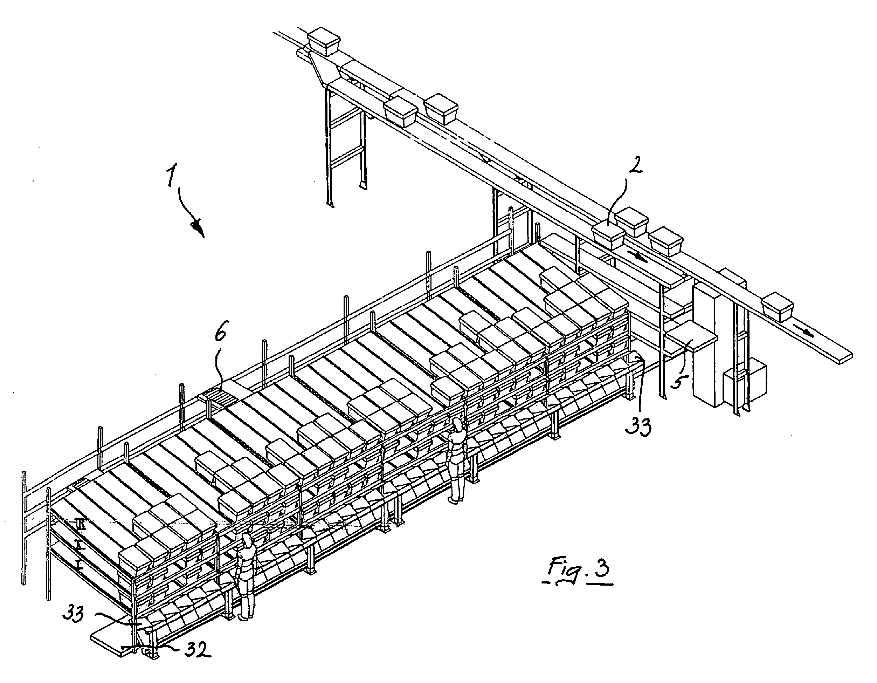

Für die Zusammenstellung eines Kommissionierauftrags werden von einer oder mehreren Kommissionierpersonen 17 an einem oder mehreren Durchlaufregalen 1 die einem Behälter 2 manuell entnommenen Stückgüter in einer ersten Erfindungsalternative gemäß den Figuren 1 und 2 direkt in einen bereitgestellten Auftragsbehälter 30 kommissioniert und auf einer abziehenden Fördertechnik 32 unter dem Durchlaufregal 1 abtransportiert, oder in einer zweiten Erfindungsalternative gemäß Figur 3 in Pufferschalen 33 des Durchlaufregals 1 kommissioniert und zwischengespeichert, bevor sie auf ein unter dem Durchlaufregal 1 angeordnetes Zentralband 30 in ein fiktives Auftragsfenster geworfen und durch Förderung auf dem Zentralband erst dann dem Auftragsbehälter übergeben werden.

Das Stückgut wird sortenrein in Behältern 2 auf jeweils einer angetriebenen Förderstrecke 4 zu einem Durchlaufregal 1 automatisch transportiert und nach Lesung und Erkennung über einen angesteuerten stationären Lift 5 und angesteuerte Etagenbediengeräte 6 des Durchlaufregals 1 in ausgewählten Durchlaufkanälen 3 des Durchlaufregals mit von einer Kommissionierperson 17 manuell erreichbaren Ausgängen A automatisch eingebracht.

Für sehr langsam drehendes Stückgut ist eine Mischbefüllung der Behälter 2 zweckmäßig, bei der also das Stückgut nicht sortenrein eingebracht wird.

Insbesondere sind eine angetriebene Förderstrecke 4 in Form einer Staurollenbahn vorgesehen, sowie ein Durchlaufregal 1 mit geneigten Durchlaufkanälen 3 in mehreren Regaletagen I, II, III, vorzugsweise drei bis vier Regaletagen, deren Ausgänge A von einer Kommissionierperson 17 erreichbar sind.

Unter der untersten Regaletage I befindet sich die abziehende Fördertechnik 32.

Das Durchlaufregal 1 enthält jeweils ein verfahrbares, schienengeführten Etagenbediengerät 6 in jeder Regaletage I, II, III zum automatischen Befüllen der Durchlaufkanäle 3 mit Behälter 2, die sortenreines Stückgut enthalten.

Ferner weist das Durchlaufregal 1 einen stationären Lift 5 in einem Anschluss an die Förderstrecke 4 für einen automatischen Transport der Behälter 2 von der Förderstrecke 4 in jede ausgewählte Regaletage I, II, III auf.

Auch besitzt das Durchlaufregal 1 jeweils eine Pufferstrecke 7 in jeder Regaletage I, II, III in einem Anschluss an den Lift 5 für eine automatische Übernahme der Behälter 2 vom Lift, deren Ausgang vom Etagenbediengerät 6 automatisch anfahrbar ist, wobei das Etagenbediengerät jeweils einen Behälter 2 für einen Horizontaltransport zum Eingang E eines ausgewählten Durchlaufkanals 3 übernehmen kann.

Die Etagenbediengeräte 6 sind in als Schienen 8 ausgebildeten Horizontal-Verstrebungen des Durchlaufregals 1 durch Führungsrollen geführt.

Das Durchlaufregal 1 gemäß den Figuren 1 und 2 ist als Doppelregal ausgebildet, und es können die Etagenbediengeräte 6 in einer mittigen Regalgasse R des Doppelregals horizontal in Fahrrichtung F verfahren und bei den Ausgängen der Pufferstrecke und den Eingängen E gegenüberliegender Durchlaufkanäle 3 positioniert werden.

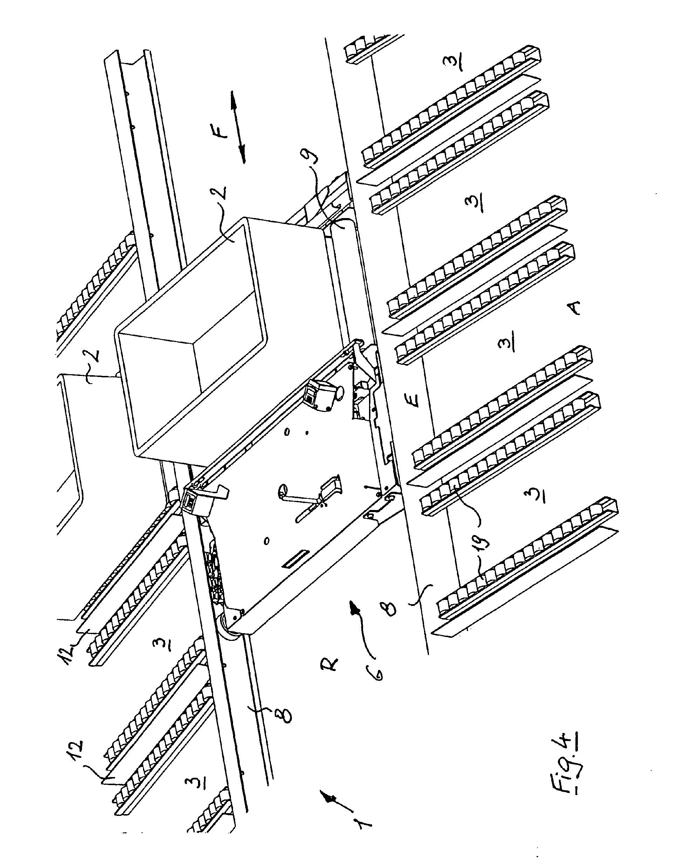

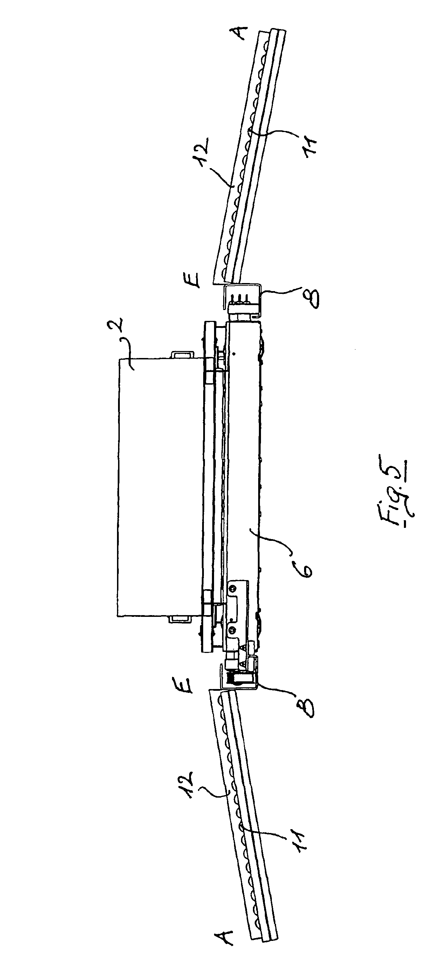

Das Etagenbediengerät 6 weist ein Lastaufnahmemittel mit antreibbaren Rollen 9 auf, deren Achsen in Fahrrichtung F des Etagenbediengeräts 6 und quer zu den Durchlaufkanälen 3 liegen, wie dies insbesondere den Figuren 4 bis 8 zu entnehmen ist.

Das Lastaufnahmemittel besitzt im Bereich der Axialenden der Rollen 9 jeweils ein stationäres seitliches Geländer 20, 21 quer zur Fahrrichtung F.

Der Abstand der beiden seitlichen Geländer 20, 21 zueinander ist einstellbar, wobei der eingestellte Abstand der Breite eines Behälters 2 entspricht. In beiden Ausführungsvarianten ist nur das vordere Geländer 20 als Verstellmittel vorgesehen, welches am Rand des Etagenbediengeräts liegt. Die beiden seitlichen Geländer 20, 21 erstrecken senkrecht zur Fahrrichtung F.

Das Etagenbediengerät 6 kann an den Eingängen E unterschiedlich breiter Durchlaufkanäle 3 positioniert werden, wobei der Abstand der beiden Geländer 20, 21 jeweils auf die Breite des angesteuerte Durchlaufkanals 3 eingestellt ist.

Das Etagenbediengerät 6 weist ferner einen Elektroantrieb 13 aufweist, welcher vorzugsweise über Schleifkontakte 10 mit einer stationären Stromschiene verbunden ist.

Der Elektroantrieb 13 besitzt einen Drehgeber, mit welchem die verfahrene Distanz des Etagenbediengeräts 6 gemessen werden kann.

Das Etagenbediengerät 6 ist mit zwei Sensoren 11 zum Erkennen des Befüllungszustands eines Durchlaufkanals 3 ausgestattet.

Die Förderstrecke 4 weist eine Erkennungseinrichtung zum Erkennen eines zugeführten Behälters 2 und zur Weitergabe der Behälterdaten an einen Zentralrechner auf, welcher einen vollautomatischen Betrieb der Zuführung der Behälter nebst Sortierung in den Durchlaufkanälen 3 bewerkstelligt.

Die Förderstrecke 4 ist Überkopf angeordnet und ermöglicht einen freien Durchgang zum Durchlaufregal.

Die Förderstrecke 4 weist eine Anbindungsstrecke 4' für (nicht veranschaulichte) benachbarte Durchlaufregale auf, wobei die Durchlaufregale 1 in einer Parallelanordnung vorgesehen sein können.

Jedes Durchlaufregal 1 ist aus mehreren hintereinander liegenden Regalmodulen M zusammengesetzt, welche in Fahrrichtung F der Etagenbediengeräte 6 liegen.

Die Durchlaufkanäle 2 besitzen zwei seitliche Röllchenleisten 19, wobei benachbarte Durchlaufkanäle 3 durch Trennstege 12 voneinander abgetrennt sind.

Auch sind im Bereich der Pufferstrecken Ausschuss-Durchlaufkanäle 15 vorgesehen, in welchen beschädigte oder nicht identifizierte Behälter 2 aussortiert und separat weiterbehandelt werden.

Das Etagenbediengerät 6 besitzt also Rollen 9 als Lastaufnahmemittel. Die Rollen 9 sind angetrieben und können einen Behälter 2 quer zur Fahrtrichtung F aufnehmen und abgeben.

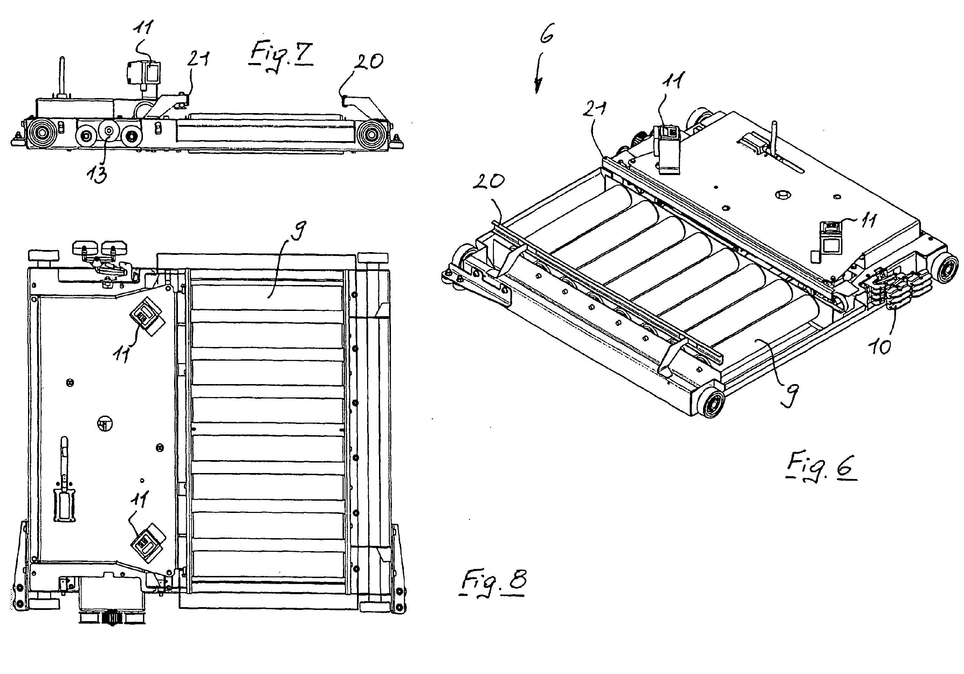

Das Etagenbediengerät 6 fährt in Fahrschienen 8. In den beschriebenen Ausführungsvarianten erfolgt der Antrieb des Etagenbediengeräts mit einem sog. Omega-Antrieb gemäß Figur 7 entlang eines fix verlegten Zahnriemens, wobei der Zahnriemen wie bei einem Omega um die Antriebsrolle läuft. Der Motor des Etagenbediengeräts besitzt einen Drehgeber, mit dem die verfahrene Distanz gemessen werden kann. Somit kennt das Etagenbediengerät seine Position und kann sich vor dem gewünschten Durchlaufkanal 3 positionieren. Der Antrieb kann grundsätzlich auch reibschlüssig mit Rädern ausgeführt werden. Das Etagenbediengerät wird durch Führungsrollen in einer fixen Position in Bezug auf das Durchlaufregal gehalten, da die Schienen 8 Bestandteil des Durchlaufregals sind.

Durch Einschalten der Rollen kann das Etagenbediengerät Behälter 2 von der Fördertechnik aufnehmen und in die Durchlaufkanäle 3 abgeben. Ein Durchlaufkanal wird aus zwei oder mehreren Röllchenleisten 19 und begrenzenden Trennstegen 12 gebildet.

Das Etagenbediengerät 6 ist mit Sensoren 11 ausgestattet, die es ermöglichen, zu erkennen, ob ein Durchlaufkanal 3 noch einen Behälter 2 aufnehmen kann, oder der Durchlaufkanal voll ist. Dies kann mit einem Sensor 11 geschehen, der in der Lage ist, die Entfernung zum nächsten Hindernis zu messen (z.B. optisch oder mit Ultraschall). Es kann aber auch pro Durchlaufkanal ein Reflektor angeordnet werden, und eine Lichtschranke prüft, ob die Wegstrecke bis zum Reflektor frei ist. Sieht die Lichtschranke den Reflektor, so ist der Durchlaufkanal frei.

Der Sensor 11 kann auch dafür verwendet werden, um zu kontrollieren, dass ein Behälter 2 korrekt in den Durchlaufkanal 3 abgegeben wurde.

Im Falle von unterschiedlich breiten Behältern 2 und auf die Breite angepassten Durchlaufkanälen muss der Behälter 2 an einer definierten Kante ausgerichtet sein. In diesem Fall ist es das vordere Geländer 20 des Etagenbediengeräts 6. Die Ausrichtung an dem Geländer kann dadurch erfolgen, dass in einer weiteren Ausführungsvariante der Behälter von der Fördertechnik in der ausgerichteten Position bereits übernommen wird. Primär ist jedoch vorgesehen, das Geländer 20 verschiebbar auszuführen, um die gewünschte Ausrichtung zu erreichen. Mit dem verschiebbaren Geländer 20 ist auch eine gleichzeitige Vermessung der Produktbreite möglich. Dadurch können Abweichungen zwischen Kanalbreite und Produktbreite erkannt werden.

Der Lift kann mit unterschiedlichen Liftplattformen ausgestattet sein. In der einfachsten Variante ist die Plattform einfach tief, d.h. es kann pro Fahrt nur ein Behälter 2 mitgeführt werden. Grundsätzlich ist es möglich, auch doppelt oder mehrfachtiefe Plattformen zu bauen, um mehrere Behälter pro Fahrt transportieren zu können. Je nach Anordnung der Fördertechnik kann der Lift als sog. C-Förderer oder S-Förderer arbeiten. "C" bedeutet, dass der Behälter ein "C" beschreibt, also der Behälter in eine Richtung einfährt und in die andere Richtung wieder ausfährt. Bei einem "S" fährt der Behälter in dieselbe Richtung wieder vom Lift ab.

Erfindungsgemäß wird mithin bei einem Verfahren zum manuellen Kommissionieren von Stückgut in einer Kommissionieranlage mit einem Durchlaufregal 1 als Vorrat zum manuellen Kommissionieren das Stückgut vorzugsweise sortenrein in Behältern 2 auf einer angetriebenen Förderstrecke 4 zum Durchlaufregal 1 automatisch transportiert und nach Lesung und Erkennung über einen angesteuerten stationären Lift 5 und angesteuerte Etagenbediengeräte 6 des Durchlaufregals 1 in ausgewählten Durchlaufkanälen 3 des Durchlaufregals mit von einer Kommissionierperson 17 manuell erreichbaren Ausgängen A automatisch eingebracht, und es wird Stückgut aus einem Behälter 2 an einem ausgewählten Ausgang A eines Durchlaufkanals 3 von der Kommissionierperson 17 an ihrem Kommissionier-Arbeitsplatz auftragsbezogen einem bereitgestellten Auftragsbehälter 30 zugeführt.

Der mit Stückgut eines Kommissionierauftrags belegte Auftragsbehälter 30 kann einem anderen Kommissionier-Arbeitsplatz des gleichen Durchlaufregals 1 zugeführt werden.

Bei Nichtvorhandensein eines zu kommissionierenden Stückguts im Durchlaufregal 1 wird der mit Stückgut belegte Auftragsbehälter 30 zumindest einem weiteren Durchlaufregal zugeführt, welches das zu kommissionierende Stückgut enthält.

Ein vollständig kommissionierter Auftragsbehälter 30 wird einer Versandstation zugeführt.

Insbesondere werden in der ersten Erfindungsvariante gemäß den Figuren 1 und 2 die Stückgüter eines Kommissionier-Arbeitsplatzes von der Kommissionierperson 17 direkt in einen bereitgestellten Auftragsbehälter 30 eingegeben, und es wird anschließend der Auftragsbehälter zu einem anderen Kommissionier-Arbeitsplatz des gleichen Durchlaufregals 1 auf der Regalfront-Förderstrecke 31 für ein weiteres manuelles Kommissionieren transportiert, oder bei Nichtvorhandensein von weiterem zu kommissionierenden Stückgut im Durchlaufregal 1 von der Kommissionierperson 17 unter das Durchlaufregal auf eine abziehende Fördertechnik 32 geschoben, welches den Auftragsbehälter zu einem anderen Durchlaufregal für ein weiteres manuelles Kommissionieren von Stückgut fördert oder nach Abschluss des Kommissionierauftrags zur Versandstation transportiert.

Demgegenüber werden in der zweiten Erfindungsvariante nach Figur 3 die Stückgüter von der oder den Kommissionierpersonen 17 in ausgewählte Pufferschalen 33 des Durchlaufregals 1 eingegeben und anschließend die gepufferten Stückgüter eines Kommissionierauftrags auf das Zentralband 32 unter dem Durchlaufregal durch Öffnen der Pufferschalen geworfen und auf dem Zentralband einem Auftragsbehälter 30 zugeführt, welcher zu einem anderen Durchlaufregal für ein weiteres manuelles Kommissionieren gefördert oder nach Abschluss des Kommissionierauftrags zur Versandstation transportiert wird.

Ein vollständig entleerter Behälter am Ausgang A eines Durchlaufkanals kann als Auftragsbehälter 30 verwendet werden.

In der ersten Erfindungsalternative nach den Figuren 1 und 2 ist insbesondere der bodennahen abziehenden Fördertechnik 32 unter der ersten bodennahen Regaletage I im Bereich der Kommissionierfront des Durchlaufregals an den Ausgängen A der Durchlaufkanäle eine parallele unmittelbar benachbarte Regalfront-Förderstrecke 31 in gleicher Höhe vorgeordnet, auf der Auftragsbehälter 30 für ein Befüllen mit kommissioniertem Stückgut längs zumindest eines Kommissionier-Arbeitsplatzes manuell bewegbar oder förderbar und an einer gewünschten Stelle für ein manuelles Kommissionieren positionierbar sind, wobei Auftragsbehälter 30 von der Regalfront-Förderstrecke 31 auf die abziehende Fördertechnik 32, und umgekehrt, manuell umsetzbar sind, insbesondere verschoben werden können.

Insbesondere erfolgt das Aussteuern der Auftragsbehälter in eine Station (Regalbereich einer Kommissionierperson) bzw. zu einem Kommissionier-Arbeitsplatz automatisch. Nur das Überschieben der fertigen Auftragsbehälter erfolgt per Hand. Auch die Fördertechnik direkt vor der Kommissionierperson ist vorzugsweise nicht angetrieben, so dass eine Kommissionierperson den aktuell bearbeiteten Auftragsbehälter mit sich mitschieben kann.

In der zweiten Erfindungsalternative nach Figur 3 weist insbesondere das Durchlaufregal 1 im Bereich der Ausgänge A der Durchlaufkanäle Pufferschalen 33 für kommissioniertes Stückgut auf, deren öffenbare Böden über dem Zentralband liegen und deren vorzugsweise schräger Eingang oben offen und für eine Kommissionierperson 17 leicht erreichbar ist.

Vorzugsweise ist längs der Kommissionierfront des Durchlaufregals 1 unter jedem Ausgang A der Durchlaufkanäle der ersten bodennahen Regaletage I eine Pufferschale 33 angeordnet. Bei der Kommissionierung in Auftragsbehältern wird der Auftragsbehälter in eine Station, d.h. in einen Regalbereich des Durchlaufregals ausgesteuert. Die Produkte werden von den Quellpositionen entnommen und in den Auftragsbehälter gegeben. Die Führung der Kommissionierperson kann auf verschiedenste Weise erfolgen. Die Kommissionierperson kann klassisch nach Kommissionierlisten arbeiten, oder über "Pick-to-Light" oder "Voicepicking" geführt. Wenn alle Produkte dieser Station in dem Auftragsbehälter gegeben wurden, schiebt die Kommissionierperson den Auftragsbehälter auf die Verbindungsfördertechnik über. Er fährt zu nächsten Station oder verlässt den Bereich.

Bei der Kommissionierung in Pufferschalen wird die Kommissionierperson mittels Funkterminals oder Pick-To-Light-Anzeigen geführt. Auch eine Benutzerführung mit Sprache ist denkbar. Der Benutzer gibt die Produkte aus seinem Regalbereich, welche zu einem Auftrag gehören, in die zugehörige Pufferschale. Sind alle Produkte eines Auftrages in den Pufferschalen der jeweiligen Regalbereiche, so wird der Auftrag am Zentralband gestartet, und die Produkte werden in das Auftragsfenster geworfen. Am vorderen Ende werden die Produkte in den Auftragsbehälter übergeben.

## Patentansprüche

1. Verfahren zum manuellen Kommissionieren von Stückgut in einer Kommissionieranlage mit einem Durchlaufregal (1) als Vorrat zum manuellen Kommissionieren, wobei das Stückgut vorzugsweise sortenrein in Behältern oder Kartons (2) auf einer angetriebenen Förderstrecke (4) zum Durchlaufregal (1) automatisch transportiert und über einen angesteuerten stationären Lift (5) des Durchlaufregals (1) in ausgewählten Durchlaufkanälen (3) des Durchlaufregals mit von einer Kommissionierperson (17) manuell erreichbaren Ausgängen (A) automatisch eingebracht wird, und Stückgut an einem ausgewählten Ausgang (A) eines Durchlaufkanals (3) von der Kommissionierperson (17) an ihrem Kommissionier-Arbeitsplatz auftragsbezogen einem bereitgestellten Auftragsbehälter (30) zugeführt wird,
**dadurch gekennzeichnet,**
**dass** das Stückgut nach Lesung und Erkennung über angesteuerte Etagenbediengeräte (6) des Durchlaufregal (1) in ausgewählten Durchlaufkanälen (3) eingebracht wird, dass das Stückgut von der Kommissionierperson (17) aus einem Behälter/Karton (2) entnommen wird, wobei die Stückgüter eines Kommissionier-Arbeitsplatzes von der Kommissionierperson (17) direkt in einen bereitgestellten Auftragsbehälter (30) eingegeben werden, und anschließend der Auftragsbehälter zu einem anderen Kommissionier-Arbeitsplatz des gleichen Durchlaufregals (1) auf einer Regalfront-Förderstrecke (31) für ein weiteres manuelles Kommissionieren transportiert wird und bei Nichtvorhandensein von weiterem zu kommissionierenden Stückgut im Durchlaufregal (1) von der Kommissionierperson (17) unter das Durchlaufregal auf eine abziehende Fördertechnik (32) geschoben wird, welches den Auftragsbehälter zu einem anderen Durchlaufregal für ein weiteres manuelles Kommissionieren von Stückgut fördert oder nach Abschluss des Kommissionierauftrags zur Versandstation transportiert, wobei vorzugsweise ein vollständig kommissionierter Auftragsbehälter (30) einer Versandstation zugeführt wird, und dass die Stückgüter von der oder den Kommissionierpersonen (17) in ausgewählte Pufferschalen (33) des Durchlaufregals (1) eingegeben und anschließend die gepufferten Stückgüter eines Kommissionierauftrags auf die abziehende Fördertechnik (32) unter dem Durchlaufregal durch Öffnen der Pufferschalen geworfen und auf der abziehenden Fördertechnik einem Auftragsbehälter (30) zugeführt werden, welcher zu einem anderen Durchlaufregal für ein weiteres manuelles Kommissionieren gefördert oder nach Abschluss des Kommissionierauftrags zur Versandstation transportiert wird.

2. Verfahren nach Anspruch 1,
**dadurch gekennzeichnet,**
**dass** der mit Stückgut eines Kommissionierauftrags belegte Auftragsbehälter (30) einem anderen Kommissionier-Arbeitsplatz des gleichen Durchlaufregals (1) zugeführt wird.

3. Verfahren nach Anspruch 1 oder 2,
**dadurch gekennzeichnet,**
**dass** bei Nichtvorhandensein eines zu kommissionierenden Stückguts im Durchlaufregal (1) der mit Stückgut belegte Auftragsbehälter (30) zumindest einem weiteren Durchlaufregal zugeführt wird, welches das zu kommissionierende Stückgut enthält.

4. Verfahren nach einem der Ansprüche 1 bis 3,
**dadurch gekennzeichnet,**
**dass** ein vollständig entleerter Behälter/Karton am Ausgang (A) eines Durchlaufkanals als Auftragsbehälter (30) verwendet wird.

5. Vorrichtung zum manuellen Kommissionieren von Stückgut in einer Kommissionieranlage mit einem Durchlaufregal (1) als Vorrat zum manuellen Kommissionieren und mit einer kommissionierte Stückgüter abziehenden Fördertechnik (32), insbesondere zur Durchführung des Verfahrens nach einem der Ansprüche 1 bis 4,
mit
zumindest einer angetriebenen Förderstrecke (4) vorzugsweise in Form einer Staurollenbahn,
zumindest einem Durchlaufregal (1)
- mit geneigten Durchlaufkanälen (3) in mehreren Regaletagen (I, II, III), vorzugsweise drei oder vier Regaletagen, die über der kommissionierte Stückgüter abziehenden Fördertechnik (32) angeordnet sind und deren Ausgänge (A) von einer Kommissionierperson (17) für ein manuelles Kommissionieren von Stückgut erreichbar sind,
- und mit zumindest einem stationären Lift (5) in einem Anschluss an die Förderstrecke (4) für einen automatischen Transport der Behälter/Kartons (2) von der Förderstrecke (4) in jede ausgewählte Regaletage (I, II, III),
**dadurch gekennzeichnet,**
**dass** jeweils ein verfahrbares, schienengeführtes Etagenbediengerät (6) in jeder Regaletage (I, II, III) zum automatischen Befüllen der Durchlaufkanäle (3) mit Behälter oder Kartons (2) vorgesehen ist, die vorzugsweise sortenreines Stückgut enthalten,
**dass** eine Pufferstrecke (7) in jeder Regaletage (I, II, III) in einem Anschluss an den Lift (5) für eine automatische Übernahme der Behälter/Kartons (2) vom Lift vorgesehen ist, deren Ausgang vom Etagenbediengerät (6) automatisch anfahrbar ist, wobei das Etagenbediengerät jeweils einen Behälter/Karton (2) für einen Horizontaltransport zum Eingang (E) eines ausgewählten Durchlaufkanals (3) übernehmen kann,
**dass** das Etagenbediengerät (6) ein Lastaufnahmemittel aufweist, das jeweils ein stationäres seitliches Geländer (20, 21) quer zur Fahrrichtung (F) besitzt, und
**dass** der Abstand der beiden seitlichen Geländer (20, 21) zueinander einstellbar ist und vorzugsweise der Breite eines Behälters/Kartons (2) entspricht, wobei zumindest eines der beiden Geländer (20) verstellbar ist.

6. Vorrichtung nach Anspruch 5,
**dadurch gekennzeichnet,**
**dass** das Etagenbediengerät (6) an den Eingängen (E) unterschiedlich breiter Durchlaufkanäle (3) positionierbar ist, wobei der Abstand der beiden Geländer (20, 21) jeweils auf die Breite des angesteuerten Durchlaufkanals (3) eingestellt ist.

7. Vorrichtung nach Anspruch 5 oder 6,
**dadurch gekennzeichnet,**
**dass** der bodennahen abziehenden Fördertechnik (32) unter der ersten bodennahen Regaletage (I) im Bereich der Kommissionierfront des Durchlaufregals an den Ausgängen (A) der Durchlaufkanäle eine parallele unmittelbar benachbarte Regalfront-Förderstrecke (31) in gleicher Höhe vorgeordnet ist, auf der Auftragsbehälter (30) für ein Befüllen mit kommissioniertem Stückgut längs zumindest eines Kommissionier-Arbeitsplatzes förderbar und an einer gewünschten Stelle für ein manuelles Kommissionieren positionierbar sind, wobei Auftragsbehälter (30) von der Regalfront-Förderstrecke (31) auf die abziehende Fördertechnik (32), und umgekehrt, manuell umsetzbar sind, insbesondere verschoben werden können.

8. Vorrichtung nach einem der Ansprüche 5 bis 7,
**dadurch gekennzeichnet,**
**dass** das Durchlaufregal (1) im Bereich der Ausgänge (A) der Durchlaufkanäle Pufferschalen (33) für kommissioniertes Stückgut aufweist, deren öffenbare Böden über der abziehenden Fördertechnik liegen und deren vorzugsweise schräger Eingang oben offen und für eine Kommissionierperson (17) leicht erreichbar ist.

9. Vorrichtung nach einem der Ansprüche 5 bis 8,
**dadurch gekennzeichnet,**
**dass** längs der Kommissionierfront des Durchlaufregals (1) unter jedem Ausgang (A) der Durchlaufkanäle der ersten bodennahen Regaletage (I) eine Pufferschale (33) angeordnet ist.

10. Vorrichtung nach einem der Ansprüche 5 bis 9,
**dadurch gekennzeichnet,**
**dass** die Etagenbediengeräte (6) in als Schienen (8) ausgebildeten Horizontal-Verstrebungen des Durchlaufregals (1) geführt sind, wobei die Etagenbediengeräte (6) auf der Eingangsseite der Durchlaufkanäle horizontal verfahrbar sind.

11. Vorrichtung nach einem der Ansprüche 5 bis 10,
**dadurch gekennzeichnet,**
**dass** das Durchlaufregal (1) als Doppelregal ausgebildet ist und die Etagenbediengeräte (6) in einer mittigen Regalgasse (R) des Doppelregals horizontal verfahrbar und bei den Ausgängen der Pufferstrecke und den Eingängen (E) gegenüberliegender Durchlaufkanäle (3) positionierbar sind.

12. Vorrichtung nach einem der Ansprüche 5 bis 11,
**dadurch gekennzeichnet,**
**dass** das Lastaufnahmemittel antreibbare Rollen (9) sind, deren Achsen in Fahrrichtung (F) des Etagenbediengeräts (6) und quer zu den Durchlaufkanälen (3) liegen, oder das Lastaufnahmemittel ein Förderband oder mehrere Rund- oder Zahnriemen sind.

13. Vorrichtung nach einem der Ansprüche 5 bis 12,
**dadurch gekennzeichnet,**
**dass** das Etagenbediengerät (6) einen Elektroantrieb (13) aufweist, welcher vorzugsweise über Schleifkontakte (10) mit einer stationären Stromschiene verbunden ist" wobei der Elektroantrieb (13) einen Drehgeber besitzt, mit welchem die verfahrene Distanz des Etagenbediengeräts (6) gemessen werden kann.

14. Vorrichtung nach einem der Ansprüche 5 bis 13,
**dadurch gekennzeichnet,**
**dass** das Etagenbediengerät (6) mit zumindest einem Sensor (11) zum Erkennen des Befüllungszustands eines Durchlaufkanals. (3) ausgestattet ist.

15. Vorrichtung nach einem der Ansprüche 5 bis 14,
**dadurch gekennzeichnet,**
**dass** die Förderstrecke (4) eine Erkennungseinrichtung zum Erkennen eines zugeführten Behälters/Kartons (2) und zur Weitergabe der Behälterdaten an einen Zentralrechner aufweist, welcher einen vollautomatischen Betrieb der Zuführung der Behälter nebst Sortierung in den Durchlaufkanälen (3) bewerkstelligt.

## Claims

1. Process for manually commissioning individually packaged products in a commissioning unit with a flow shelf (1) as a reserve for manual commissioning, wherein the individually packaged products are transported automatically in containers or cardboard boxes (2) on a driven conveying section (4) to the flow shelf (1) preferably in such a way that they are all of the same kind and they are automatically introduced via an activated stationary elevator (5) ofthe flow shelf (1) into selected throughput channels (3) of the flow shelf with outlets (A) that can be reached by a commissioning person (17) by hand, and individually packaged products are fed at a selected outlet (A) of a throughput channel (3) by the commissioning person (17) at his commissioning workplace according to the order to an order container (30) made available,
**characterized in that**
the individually packaged products, and after reading and recognition, are introduced via activated level control units (6) of the flow shelf (1) into selected throughput channels (3), and the individually packaged products are taken from a container/cardboard box (2) by the commissioning person (17), wherein the individually packaged products of a commissioning workplace are introduced by the commissioning person (17) directly into an order container (30) made available, and the order container is then transported to another commissioning workplace of the same flow shelf (1) on a bay front conveying section (31) for another manual commissioning, or in the absence of more individually packaged products to be commissioned in the flow shelf (1), they are pushed by the commissioning person (17) under the flow shelf onto a pulling-off conveying mechanism (32), which conveys the order container to another flow shelf For another manual commissioning of individually packaged product or transports same to the shipping station after conclusion ofthe commissioning order, wherein the individually packaged products are introduced by the commissioning person (17) into selected buffer trays (33) of the flow shelf (1) and the buffered individually packaged products of one commissioning order are then thrown onto the pulling-off conveying mechanism (32) under the flow shelf bay opening the buffer trays and fed on the pulling-off conveying mechanism to an order container (30), which is conveyed to another flow shelf for another manual commissioning or transported to the shipping station after conclusion ofthe commissioning order.

2. Process in accordance with claim 1,
**characterized in that**
the order container (30) charged with individually packaged products of a commissioning order is fed to another commissioning workplace of the same flow shelf (1).

3. Process in accordance with claim 1 or 2,
**characterized in that**
in the absence of an individually packaged product to be commissioned in the flow shelf (1), the order container (30) charged with individually packaged product is fed at least to one other flow shelf, which contains the individually packaged product to be commissioned.

4. Process in accordance with one of the claims 1 through 3,
**characterized in that**
a completely emptied container/cardboard box is used as an order container (30) at the outlet (A) of a throughput channel.

5. Device for manually commissioning individually packaged products in a commissioning unit with a flow shelf (1) as a reserve for manual commissioning, and a pulling-off conveying mechanism (32) for pulling off commissioned individually packaged products, preferably for carrying out the process in accordance with one of the claims 1 through 4, comprising
at least one driven conveying section (4) preferably in the form of an accumulating roller conveyor,
at least one flow shelf (1)
- with sloped throughput channels (3) in a plurality of bay levels (I, II, III), preferably three or four bay levels, which are arranged over the conveying mechanism (32) pulling off commissioned individually packaged products, and whose outlets (A) can be reached by a commissioning person (17) for manually commissioning individually packaged products,
- and with at least one stationary elevator (5) connected to the conveying section (4) for automatically transporting the containers/cardboard boxes (2) from the conveying section (4) into each selected bay level (I, II, III),
**characterized by**
a displaceable, track-guided level control unit (6) each in each bay level (I, II, III) for automatically filling the throughput channels (3) with containers of cardboard boxes (2), which contain individually packaged products that are all of the same kind, with a buffer section (7) in each bay level (I, II, III) connected to the elevator (5) for taking over the containers/cardboard boxes (2) automatically from the elevator, whose outlet can be automatically approached by the level control unit (6), wherein said level control unit can take over a container/cardboard box (2) each for horizontal transportation to the inlet (E) of a selected throughput channel (3), and the level control unit (6) has a load pickup means, which load pickup means has a stationary lateral railing (20, 21) each at right angles to the direction of travel (F), and the distance between the two lateral railings (20, 21) can be set and preferably corresponds to the width of a container/cardboard box (2), and at least one of the two railings (20) is adjustable.

6. Device in accordance with claim 5,
**characterized in that**
the level control unit (6) can be positioned at the inlets (E) of throughput channels (3) of different widths, the distance between the two railings (20, 21) always being set to the width of the activated throughput channel (3).

7. Device in accordance with claim 5 or 6,
**characterized in that**
a parallel, directly adjacent bay front conveying section (31), on which order containers (30) can be conveyed manually along at least one commissioning workplace for filling with commissioned individually packaged products and positioned at a desired site for manual commissioning, is arranged at the same level upstream of the pulling-off conveyor mechanism (32) located near the floor under the first bay level (I) located close to the floor in the area of the commissioning front of the flow shelf at the outlets (A) of the throughput channels, wherein order containers (30) can be manually transferred, especially displaced, from the bay front conveying section (31) onto the pulling-off conveyor mechanism (32) and vice versa.

8. Device in accordance with one of the claims 5 through 7,
**characterized in that**
in the area ofthe outlets (A) of the throughput channels, the flow shelf (1) has buffer trays (33) for commissioned individually packaged products, whose openable bottoms are located over the pulling-off conveyor mechanism and whose preferably oblique inlet is open at the top and can be easily reached by a commissioning person (17).

9. Device in accordance with one of the claims 5 through 8,
**characterized in that**
a buffer tray (33) is arranged along the commissioning front ofthe flow shelf (1) under each outlet (A) of the throughput channels of the first bay level (I) near the floor.

10. Device in accordance with one of the claims 5 through 9,
**characterized in that**
the level control units (6) are guided in horizontal braces ofthe flow shelf (1), which are designed as rails (8), wherein the level control units (6) are horizontally displaceable on the inlet side of the throughput channels.

11. Device in accordance with one of the claims 5 through 10,
**characterized in that**
the flow shelf (1) is designed as a double bay and the level control units (6) are horizontally displaceable in a central bay aisle (R) of the double bay and can be positioned at the outlets of the buffer section and at the inlets (E) of opposite throughput channels (3).

12. Device in accordance with one of the claims 5 through 11,
**characterized in that**
the load pickup means is formed by drivable rollers (9), whose axes extend in the direction of travel (F) of the level control unit (6) and at right angles to the throughput channels (3), or the load pickup means is formed by a conveyor belt or a plurality of round or toothed belts.

13. Device in accordance with one of the claims 5 through 12,
**characterized in that**
the level control unit (6) has an electric drive (13), which is connected to a stationary conductor rail preferably via sliding contacts (10), wherein the electric drive (13) has a shaft encoder, with which the distance traveled by the level control unit (6) can be measured.

14. Device in accordance with one of the claims 5 through 13,
**characterized in that**
the level control unit (6) is equipped with at least one sensor (11) for recognizing the state of filling of a throughput channels (3).

15. Device in accordance with one of the claims 5 through 14,
**characterized in that**
the conveying section (4) has a recognition means for recognizing a fed container/cardboard box (2) and for transmitting the data of the container to a central computer, which brings about a fully automatic operation of feeding the containers along with sorting in the throughput channels (3).

## Revendications

1. Procédé de préparation manuelle de commandes de marchandises au détail dans une installation de préparation des commandes dotée d'une étagère de transfert (1) servant de stock à la préparation manuelle de commandes, les marchandises au détail étant de préférence automatiquement transportées par type de produit dans des récipients ou cartons (2) sur un tronçon de transport entraîné (4) jusqu'à l'étagère de transfert (1) et avant d'être automatiquement insérées dans des canaux de transfert (3) de l'étagère de transfert dotés de sorties (A) pouvant être atteints manuellement par un opérateur (17), par le biais d'un ascenseur (5) stationnaire approché de l'étagère de transfert (1) et les marchandises au détail étant amenées par l'opérateur (17) jusqu'à une sortie (A) d'un canal de transfert (3) placé au niveau de son poste de préparation de commande associé à un récipient de commande (30) mis à disposition,
**caractérisé en ce que**
les marchandises au détail sont insérées dans des canaux de transfert (3) sélectionnés après lecture et reconnaissance par le biais d'appareils de commande d'étage (6) approchés de l'étagère de transfert (1),
les marchandises au détail sont prélevées par l'opérateur (17) hors d'un récipient/carton (2), les marchandises au détail d'un poste de préparation de commande de l'opérateur (17) étant directement placées dans un récipient de commande (30) mis à disposition et le récipient de commande étant ensuite transporté jusqu'à un autre poste de préparation de commande de la même étagère de transfert (1) sur un tronçon de transport (31) prévu à l'avant de l'étagère pour poursuivre la préparation manuelle de la commande et étant poussé sous l'étagère de transfert par l'opérateur (17), sur un système technique de transport par traction (32), en cas d'absence d'autres marchandises au détail commandées dans cette même étagère de transfert (1), ledit système transportant le récipient de commande jusqu'à une autre étagère de transfert pour poursuivre la préparation manuelle de commande de marchandises au détail ou, à la fin de la préparation de la commande, l'acheminant jusqu'à la station d'expédition, un récipient de commande (30) contenant une commande entière étant de préférence amené à une station d'expédition, et
les marchandises au détail sont placées par le ou les opérateurs (17) dans des coques de stockage temporaire (33) sélectionnée de l'étagère de transfert (1) avant que les marchandises au détail temporairement stockées d'une commande donnée ne soient balancées sur le système technique de transport par traction (32) placé en dessous de l'étagère de transfert par ouverture des coques de stockage temporaire et soient acheminées par le système technique de transport par traction jusqu'à un récipient de commande (30), alors transporté à une autre étagère de transfert pour poursuivre la préparation manuelle de la commande ou à la station d'expédition à la fin de la commande.

2. Procédé selon la revendication 1,
**caractérisé en ce que**
le récipient de commande (30) contenant les marchandises au détail d'une commande donnée est amené à un autre poste de préparation de commande de la même étagère de transfert(1).

3. Procédé selon la revendication 1 ou 2,
**caractérisé en ce que**
en cas d'absence de marchandises au détail à préparer dans l'étagère de transfert (1), le récipient de commande (30) contenant les marchandises au détail est amené à au moins une étagère de transfert supplémentaire contenant les marchandises de détail à préparer.

4. Procédé selon l'une quelconque des revendications 1 à 3,
**caractérisé en ce que**
un récipient/carton entièrement vidé est utilisé comme récipient de commande (30) au niveau de la sortie (A) d'un canal de transfert.

5. Dispositif de préparation manuelle de commandes de marchandises au détail dans une installation de préparation des commandes dotée d'une étagère de transfert (1) servant de stock à la préparation manuelle de commandes et avec un système technique de transport par traction (32) des marchandises au détail préparées, notamment pour la mise en oeuvre du procédé selon l'une quelconque des revendications 1 à 4,
avec
au moins un tronçon de transport entraîné (4) prenant de préférence la forme d'un convoyeur accumulateur à rouleaux,
au moins une étagère de transfert (1) comprenant
- des canaux de transfert (3) adaptés placés à plusieurs étages d'étagère (I, II, III), de préférence trois ou quatre étages d'étagère, disposés au-dessus du système technique de transport par traction (32) des marchandises au détail préparées et dont les sorties (A) peuvent être atteintes par un opérateur (17) pour effectuer une préparation manuelle de commande de marchandises au détail, et
- au moins un ascenseur (5) stationnaire raccordé au tronçon de transport (4) pour transporter automatiquement les récipients/cartons (2) du tronçon de transport (4) jusqu'à l'étage d'étagère (I, II, III) sélectionné,
**caractérisé en ce que**
respectivement un appareil de commande d'étage (6) mobile guidé sur rail est prévu à chaque étage d'étagère (I, II, III) pour le remplissage automatique des canaux de transfert (3) avec des récipients ou cartons (2) contenant de préférence des marchandises au détail classées par type de produit,
une section tampon (7) prévue à chaque étage d'étagère (I, II, III) au niveau d'une section de jonction positionnée au niveau de l'ascenseur (5) servant à prendre automatiquement les récipients/cartons (2) arrivant par l'ascenseur et dont la sortie est automatiquement accessible à un appareil de commande d'étage (6), l'appareil de commande d'étage pouvant respectivement prendre un récipient/carton (2) pour le transporter horizontalement jusqu'à l'entrée (E) d'un canal de transfert (3) sélectionné,
l'appareil de commande d'étage (6) comporte un moyen d'absorption de charge possédant respectivement une rampe (20, 21) latérale stationnaire s'étendant transversalement par rapport à la direction de déplacement (F), et
l'écartement entre les deux rampes (20, 21) latérales étant réglable et correspondant de préférence à la largeur d'un récipient/carton (2), au moins une des deux rampes (20) étant réglable.

6. Dispositif selon la revendication 5,
**caractérisé en ce que**
l'appareil de commande d'étage (6) peut être positionné au niveau des entrées (E) de canaux de transfert (3) de différentes largeurs, l'écartement des deux rampes (20, 21) étant respectivement réglé en fonction de la largeur du canal de transfert (3) approché.

7. Dispositif selon la revendication 5 ou 6,
**caractérisé en ce que**
un tronçon de transport (31) prévu à l'avant de l'étagère parallèle directement connexe est placé directement en amont à même hauteur du système technique de transport par traction (32) situé à proximité du sol, sous le premier étage d'étagère (I) le plus proche du sol, dans la zone de partie avant de préparation des commandes de l'étagère de transfert placée au niveau des sorties (A) des canaux de transfert, des récipients de commande (30) pouvant être transportés sur ledit tronçon de transport pour effectuer un remplissage des marchandises de détail commandées, le long d'au moins un poste de préparation de commande, et pouvant être positionnés à un endroit souhaité pour la préparation manuelle des commandes, les récipients de commande (30) pouvant être déplacés, notamment poussés, manuellement du tronçon de transport (31) prévu à l'avant de l'étagère jusqu'au système technique de transport par traction (32), et inversement.

8. Dispositif selon l'une quelconque des revendications 5 à 7,
**caractérisé en ce que**
l'étagère de transfert (1) comporte des coques de stockage temporaire (33) pour les marchandises au détail préparées, ces coques comportant un fond amovible reposant au-dessus du système technique de transport par traction dans la zone des sorties (A) des canaux de transfert et une entrée de préférence inclinée, ouverte sur le dessus et facilement accessible pour un opérateur (17).

9. Dispositif selon l'une quelconque des revendications 5 à 8,
**caractérisé en ce que**
une coque de stockage temporaire (33) est disposée le long de la section avant de préparation des commandes de l'étagère de transfert (1), en dessous de chaque sortie (A) des canaux de transfert du premier étage d'étagère (I) situé le plus près du sol.

10. Dispositif selon l'une quelconque des revendications 5 à 9,
**caractérisé en ce que**
les appareils de commande d'étage (6) sont guidés dans des arcs-boutants horizontaux prenant la forme de rails (8) de l'étagère de transfert (1), les appareils de commande d'étage (6) pouvant être déplacés dans le plan horizontal du côté d'entrée des canaux de transfert.

11. Dispositif selon l'une quelconque des revendications 5 à 10,
**caractérisé en ce que**
l'étagère de transfert (1) prend la forme d'une double étagère et que les appareils de commande d'étage (6) peuvent se déplacer horizontalement dans un couloir (R) central de la double étagère et être positionnés à proximité des sorties de la section tampon des entrées et des canaux de transfert (3) opposés aux entrées (E).

12. Dispositif selon l'une quelconque des revendications 5 à 11,
**caractérisé en ce que**
les moyens d'absorption de charge sont des rouleaux (9) pouvant être entraînés dont les axes se placent dans la direction de déplacement (F) de l'appareil de commande d'étage (6) ou que les moyens d'absorption de charge sont un tapis de transport ou plusieurs courroies dentées ou rondes.

13. Dispositif selon l'une quelconque des revendications 5 à 12,
**caractérisé en ce que**
l'appareil de commande d'étage (6) comporte un entraînement électrique (13) de préférence relié à un rail électrique stationnaire par le biais de contacts par frottement (10) et l'entraînement électrique (13) possédant un codeur rotatif permettant de mesurer la distance parcourue par l'appareil de commande d'étage (6).

14. Dispositif selon l'une quelconque des revendications 5 à 13,
**caractérisé en ce que**
l'état de remplissage d'un canal de transfert (3) est détecté par au moins un capteur (11) de l'appareil de commande d'étage (6).

15. Dispositif selon l'une quelconque des revendications 5 à 14,
**caractérisé en ce que**
la présence d'un récipient/carton (2) est détectée par un dispositif de détection du tronçon de transport (4) et que les données relatives au récipient sont transmises à une unité centrale qui amène de façon entièrement automatisée les récipients en incluant la réalisation du tri entre les différents canaux de transfert (3).
